# EUROPEAN PATENT APPLICATION

(11) **EP 4 575 832 A1**
(43) Date of publication of application: **25.06.2025**
(21) Application number: 23220115.2
(22) Date of filing: 22.12.2023
(51) Int. Cl.: G06F 16/538, G06F 16/583

(54) **IMAGE RANKING**

(71) Applicant: Nyris GmbH, 13355 Berlin (DE)
(72) Inventor: Lukasson, Markus c/o nyris GmbH, 13355 Berlin (DE)
(74) Representative: Maiwald GmbH

(57) **Abstract**

The present invention relates to a method of generating a ranked database, and a method of visually searching for a product in a ranked database. After determining a reference image being representative of a respective product linked to a respective product data set, for each image of the product data set a measure of similarity of the image with respect to the respective reference image is determined, and an image rank based on the determined measure of similarity is assigned to each image. After saving the plurality of product data sets comprising the image ranks to a database, a visual search for a product in this ranked database can be performed using a search image, the visual search providing search results corresponding to an image correlated to a product linked to a product data set in the database having a similarity to the search image. A threshold operation on the search results is performed, maintaining only those search results with the image rank of the corresponding image being larger than a predefined threshold.

## Description

### FIELD OF THE INVENTION

The present invention relates to a method of generating a ranked database, and a method of visually searching for a product in a ranked database.

### BACKGROUND OF THE INVENTION

In the field of visual search for products or spare parts in a database, products or items stored in the database often have multiple associated images. However, while some of these images show a close-up view of the respective product, some of the images may show a perspective view or a detail view of the product. In addition, there may be images stored in the database illustrating an exemplary application of the product, thus comprising additional objects that often are not closely related to the product itself. Therefore, in case a visual search for a product in a database is performed, these images relating to an exemplary application of a product may not only be provided as search result when searching for the respective product. In addition, in case a search is performed for one of the additional objects shown in the illustration of the exemplary application, also this search will provide this image relating to the exemplary application as search result. However, as there may be no link in the database between the image relating to the exemplary application of a respective product and the additional objects shown in the image, this search results provided by existing visual search algorithms can be regarded as false positive search result.

The inventors of the present invention have thus found that it would be advantageous to have an improved method of visually searching for a product in a database that improves the accuracy and relevance of the search results.

### SUMMARY OF THE INVENTION

It is an object of the present invention to provide an improved method of visually searching for a product in a database that avoids matching input images of a visual search for products or spare parts in a database with irrelevant or misleading images.

The object of the present invention is solved by the subject matter of the independent claims, wherein further embodiments are incorporated in the dependent claims.

The described embodiments similarly pertain to the method of generating a ranked database, and the method of visually searching for a product in a ranked database. The embodiments described further may be combined in any possible way. Synergistic effects may arise from different combinations of the embodiments although they might not be described in detail.

Further on, it shall be noted that all embodiments of the present invention concerning a method might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

According to a first aspect of the invention, there is provided a method of generating a ranked database. The method comprises the steps of receiving a plurality of product data sets, each product data set being linked to a respective product and comprising at least one image correlated to the product, and determining, for each product data set, a reference image, the reference image being representative of the respective product linked to the product data set. The method comprises further the steps of assigning, to each image of each product data set, an image rank based on a measure of similarity of the image with respect to the respective reference image of the product data set, and saving the plurality of product data sets comprising the image ranks to a database.

Thus, the method of the present invention of ranking images is a solution designed to improve the accuracy and relevance of visual searches for products or spare parts. By automatically ranking all images for each product in a database based on their suitability for search purposes, the disadvantages of the prior art can be overcome, and the matching of input images with irrelevant or misleading images resulting in false positive search results can be avoided.

Therefore, a ranked database according to the present invention is generated by assigning an image rank to each product image in the database. Each product in the database is provided with at least one image, and most often multiple image are associated with every product. Therefore, each image of each product data set in the data base is ranked according to its suitability for search purposes. For that purpose, a reference image is defined that is regarded as being representative for the respective product in the data base. Thus, the reference image can be an image of the respective product in a close-up view, which depicts the whole product in a very clear way, and preferably without any background or further items being visible in the image. An example of a suitable reference image might be a photograph of a single product on a white or transparent background. After determining the reference image, each image of the multiple images associated to the product is compared to the reference image, and a measure of similarity is determined. The measure of similarity can be an indication of a congruency with respect to relevant parameters of the respective image and the reference image. Having determined the measure of similarity, an image rank is assign to the respective image based on the determined measure of similarity, and the respective image is saved to the database including its image rank.

Therefore, a search method is provided that utilizes a ranked database in which images are ranked according to their usefulness for search purposes. A relevance score or image rank is assigned to each image, effectively prioritizing the most suitable and representative images for visual searches. Thus, image matches with a certain image rank representing a low relevance score can be completely removed from the search results or can be ignored. With this approach, it is possible to significantly reduce false positive search results and enhance the overall accuracy and efficiency of visual search outcomes.

The primary goal of the method of the present invention is to improve search relevance for visual search and assist in the discovery of relevant products by ensuring that the most relevant images are given priority during the search process.

Thus, the disadvantages of the prior art that the proposed method overcomes may include the lack of a systematic and effective ranking mechanism for assessing the usefulness of images within a product image set for visual search. The method may consider various factors that can affect image quality or relevance for visual search, such as detail views, drawings, extreme views, or images showing other products. The invention provides a solution by introducing a ranking mechanism that evaluates and ranks images within an product image set based on their usefulness for visual search.

In an embodiment of the invention, the image rank is indicative of a relevance of the image with respect to the product. The relevance of the image can advantageously be defined in that not only the images is relevant for a search for the respective product, but even more in that the image is not relevant for a search for any other product. This can preferably be assured by selecting images as reference image that do not show any other items than the product to which the image is correlated.

In an embodiment of the invention, the measure of similarity is determined by creating a vector representation of the image and a vector representation of the reference image, and calculating a distance of the vector representation of the image from the vector representation of the reference image.

Thus, a transformation of the data represented by each image into a numerical vector can be performed, preferably using deep learning or machine learning algorithms. The numerical vectors encapsulate the inherent characteristics of the respective images in a mathematically quantifiable manner. By comparison of the respective numerical vectors, the measure of similarity can be determined.

In an embodiment of the invention, calculating the distance of the vector representation of the image from the vector representation of the reference image comprises applying a mathematical operation referred to as the dot product cosine similarity. This allows efficient evaluation of the similarity of the images.

In an embodiment of the invention, the step of assigning an image rank to each image of each product data set comprises taking into account an image quality, a clarity, a visual complexity, an object to total image size coverage, and/or a relevancy to product attributes of the image. These may be parameters, which in addition to the similarity to the reference image, can be taken into account when assessing the respective image rank of the image and may be relevant for search purposes.

In an embodiment of the invention, determining the measure of similarity comprises utilizing a feature extraction method for the image and/or a feature extraction method for the reference image, machine learning algorithms, image classification, and/or similarity matching.

Thus, the proposed method involves implementing a ranking mechanism for images within a product image set. This mechanism can utilize various algorithms and techniques to assess the usefulness of each image for visual search. The technical means may include, feature extraction of relevant visual features from each image, such as colors, shapes, textures, or key points and post-processing those. Further, machine learning algorithms may be implemented, using the training of models to learn patterns and relationships between image features and their relevance for visual search. In addition, image classification can be employed, by assigning labels or scores to images based on their suitability for visual search, using predefined criteria or user feedback, and similarity matching be used by comparing images within an image set and identifying similarities or dissimilarities to determine their rank or usefulness. Preferably, the method can be a computer-implemented method.

In an embodiment of the invention, a main image of the product data set is used as reference image. The main image can be determined manually or automatically, preferably from the images of the product data set. One solution may be to only use the main image of a product for visual search. Another solution may be to manually choose and mark not suitable images for visual search, which, however, can be time consuming and not efficient when dealing with large product databases.

In an embodiment of the invention, the main image is a first image of the product data set. Thus, the image of the product data set that is saved at the first position in the database can be selected at the reference image.

In an embodiment of the invention, the step of determining a reference image comprises obtaining an average image by averaging over a vector representation of each of the images of the product data set and using the average image as reference image. In this embodiment, not a single image of the product data set is selected as the reference image, but an average image obtained by averaging over all images of the product data set can be used as reference image. Optionally, a pre-selection can be performed that may discard some of the images of the product data set such that the average image is obtained by averaging over the remaining images of the product data set to obtain the reference image.

In an embodiment of the invention, a product category of the product data set is used to determine the reference image. Thus, a product category of the product data set can be used to determine the reference image. According to that, it can be automatically determined, preferably with a trained machine learning algorithm, what is depicted in the images of the product data set, and the respective image with the best conformity with a product category of the product data set can be selected as the reference image.

According to another aspect of the invention, there is provided a method of visually searching for a product in a ranked database. The method comprises the steps of providing a ranked database, the database comprising a plurality of product data sets, each product data set being linked to a respective product and comprising at least one image correlated to the product, wherein each image correlated to the product comprises an image rank indicating a relevance of the image with respect to the product, and receiving a search image of a product to be searched in the ranked database. The method comprises further the step of performing a visual search in the database using the search image as input image, the visual search providing a plurality of search results, each of the search results corresponding to an image of a product data set of the database having a similarity to the search image, the image being correlated to a product linked to the product data set, and the method comprises the steps of performing a threshold operation on each of the plurality of search results, the threshold operation maintaining a search result if the image rank of the corresponding image is larger than a predefined threshold, and the threshold operation discarding a search result if the image rank of the corresponding image is smaller than the predefined threshold, and providing the search results as an output of the method.

Thus, after having provided a ranked database, in which each image is provided with an image rank representing a suitability for search purposes, a visual search can be performed in that database using a search image. The search may result in a plurality of images of different product data sets as search results, which images have a certain degree of similarity to the search image. After performing a threshold operation on the image ranks assigned to the images provided as search results, only those images may be provided as output of the method that have an image rank greater than a predefine threshold, and that are thus rated as being especially relevant for the visual search.

In an embodiment of the invention, the similarity of the search image to the respective images of the product data sets corresponds to a dot product cosine similarity between numerical vectors obtained by a transformation of the data represented by each image using deep or machine learning algorithms, and the numerical vectors encapsulate the inherent characteristics of the respective images in a mathematically quantifiable manner.

In an embodiment of the invention, a ranked database generated with the method according to any of the preceding embodiments is provided.

In an embodiment of the invention, the threshold is predefined either as a default value or is selected when receiving the search image. Thus, the threshold can be predefined either as default value for all search requests or it can be overwritten at request time with a custom threshold value. Alternatively, the threshold may be predefined in dependence on a number of the search results provided.

According to another aspect of the invention, there is provided a data processing apparatus comprising means for carrying out the steps of the method according to any of the preceding embodiments.

According to another aspect of the invention, there is provided a computer program comprising instructions which, when the program is executed by a computer, cause the computer to carry out the steps of the method according to any of the preceding embodiments.

According to another aspect of the invention, there is provided a computer-readable storage medium comprising instructions which, when executed by a computer, cause the computer to carry out the steps of the method according to any of the preceding embodiments.

Thus, the benefits provided by any of the above aspects equally apply to all of the other aspects and vice versa.

In summary, the invention relates to a method of generating a ranked database, and a method of visually searching for a product in a ranked database. After determining a reference image being representative of a respective product linked to a respective product data set, for each image of the product data set a measure of similarity of the image with respect to the respective reference image is determined, and an image rank based on the determined measure of similarity is assigned to each image. After saving the plurality of product data sets comprising the image ranks to a database, a visual search for a product in this ranked database can be performed using a search image, the visual search providing search results corresponding to an image correlated to a product linked to a product data set in the database having a similarity to the search image. A threshold operation on the search results is performed, maintaining only those search results with the image rank of the corresponding image being larger than a predefined threshold.

One of the advantages of embodiments of the present invention of generating a ranked database, and visually searching for a product in a ranked database is that the fundamental technical problem is overcome of how to provide an efficient and reliable method to rank images within a product image set for visual search. The challenge lies in determining which images within a product's image set are most suitable and useful for visual search, while excluding images that may hinder the accuracy or effectiveness of the search process. By solving this problem, the proposed method enhances the overall performance and relevance of visual search systems.

Another advantage may reside in that the search accuracy is improved. By ranking images within a product image set, the accuracy and relevance of visual search results is enhanced. In addition, the user experience may be enhanced. Users can quickly find relevant products using a visual search, leading to a more satisfying and efficient search experience. Further, customizability can be improved. The ranking mechanism can be tailored to specific product types or industries, allowing for flexibility and customization. By providing a more advanced image ranking solution for visual search, a competitive advantage in the market can be provided, and customer satisfaction can be increased, as the accurate and efficient visual search enabled by the inventive method can enhance the customers search experience, leading to higher conversion rates or faster identification process for spare parts. By providing an automated solution for ranking images, significant cost in manual image annotation can be saved and the onboarding process for a new customer is significantly faster.

These advantages are non-limiting and other advantages may be envisioned within the context of the present application.

The above aspects and embodiments will become apparent from and be elucidated with reference to the exemplary embodiments described hereinafter. Exemplary embodiments of the invention will be described in the following with reference to the following drawings:

### BRIEF DESCRIPTION OF THE DRAWINGS

Fig. 1 shows a block diagram of a method of generating a ranked database according to an embodiment of the invention.
Fig. 2 shows a block diagram of a method of visually searching for a product in a ranked database according to an embodiment of the invention.
Fig. 3 shows an example of a product data set comprising a plurality of images of a product to be ranked with the method of generating a ranked database according to an embodiment of the invention.

### DETAILED DESCRIPTION OF EMBODIMENTS

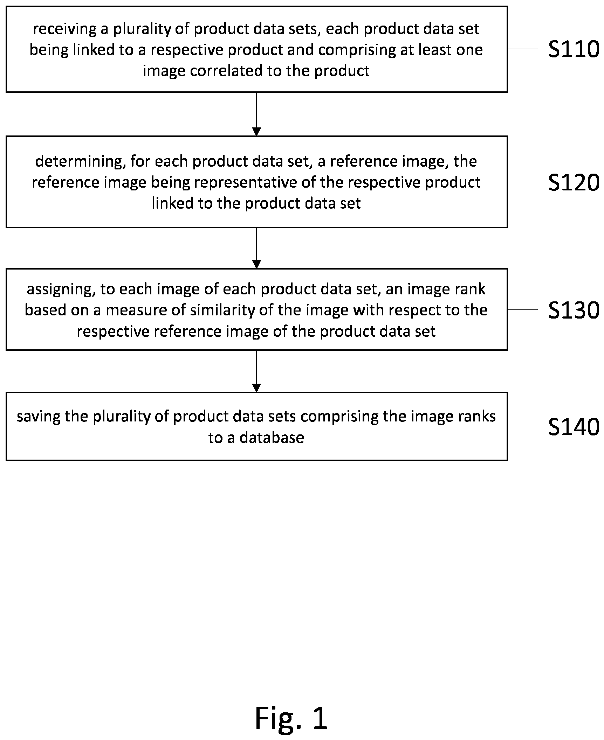

Fig. 1 shows a block diagram of a method of generating a ranked database according to an embodiment of the invention. The method comprises the step S 110 of receiving a plurality of product data sets 100, each product data set being linked to a respective product 110 and comprising at least one image 120 correlated to the product 110, and the step S120 of determining, for each product data set, a reference image 130, the reference image 130 being representative of the respective product 110 linked to the product data set 100. The method comprises further the step S130 of assigning, to each image 120 of each product data set 100, an image rank based on a measure of similarity of the image 120 with respect to the respective reference image 130 of the product data set 100, and the step S140 of saving the plurality of product data sets 100 comprising the image ranks to a database.

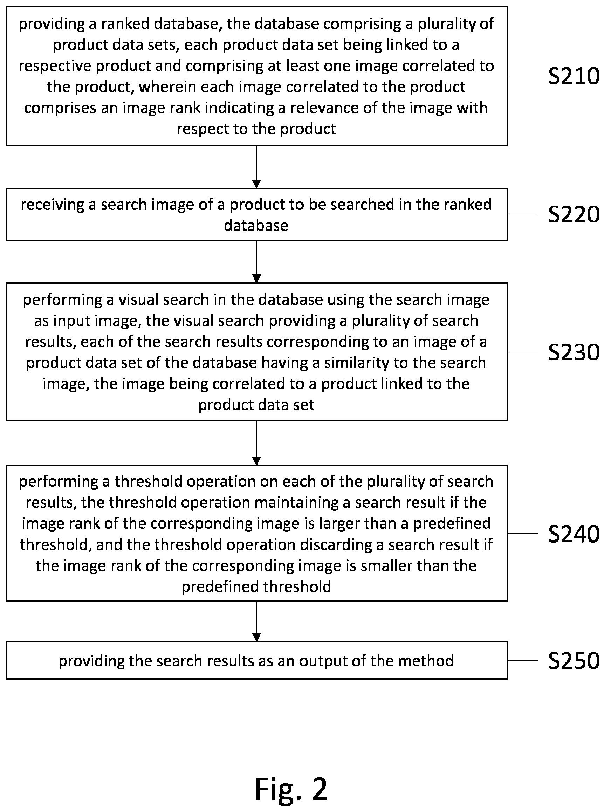

Fig. 2 shows a block diagram of a method of visually searching for a product 110 in a ranked database according to an embodiment of the invention. The method comprises the step S210 of providing a ranked database, the database comprising a plurality of product data sets 100, each product data set 100 being linked to a respective product 110 and comprising at least one image 120 correlated to the product 110, wherein each image 120 correlated to the product 110 comprises an image rank indicating a relevance of the image 120 with respect to the product. The method comprises further the step S220 of receiving a search image of a product 110 to be searched in the ranked database, and the step S230 of performing a visual search in the database using the search image as input image, the visual search providing a plurality of search results, each of the search results corresponding to an image 120 of a product data set 100 of the database having a similarity to the search image, the image 120 being correlated to a product 110 linked to the product data set 100. The method comprises further the step S240 of performing a threshold operation on each of the plurality of search results, the threshold operation maintaining a search result if the image rank of the corresponding image 120 is larger than a predefined threshold, and the threshold operation discarding a search result if the image rank of the corresponding image 120 is smaller than the predefined threshold, and the step S250 of providing the search results as an output of the method.

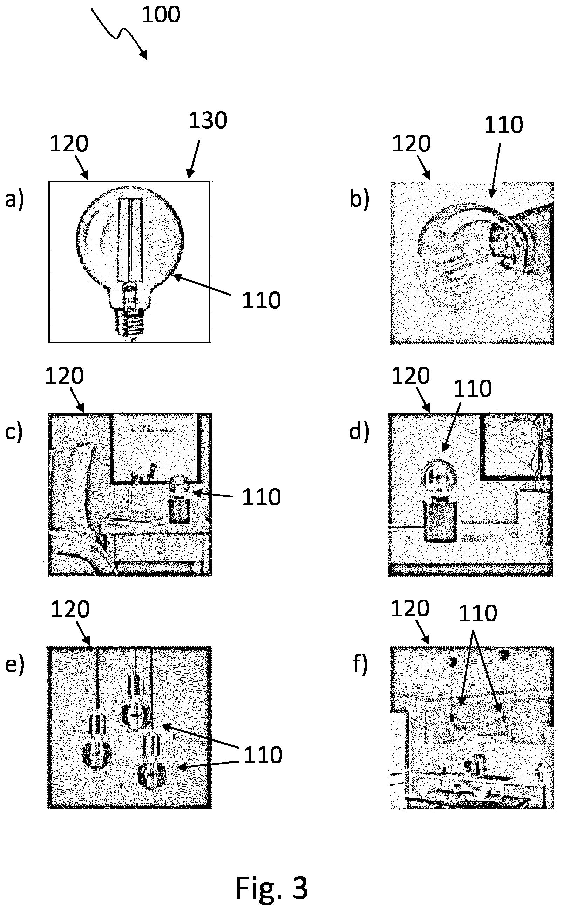

Fig. 3 shows an example of a product data set 100 comprising a plurality of images 120 of a product 110 to be ranked with the method of generating a ranked database according to an embodiment of the invention. In this example, the product data set 100 comprises six images 120 a) to f) of a product 110. In this case, the product 110 shown in each of the images 120 is a light bulb. While image a) shows a clear view of the product 110 itself, where the light bulb is completely depicted in the image 120, and nothing else is visible in the image 120 except the light bulb, image b) shows a detailed view of the light bulb, where the light bulb is screwed into the socket and the bulb is switched on. Images c) and d) show the same light bulb as the product 110, but in these cases, the light bulb covers only a small part of the complete image 120, and the images 120 show additionally decorative elements like as socket, a table, a picture frame at the wall, a vase, and part of a bed. Image e) shows three of the light bulbs each screwed into a socket hanging from the ceiling, and image f) shows two of the light bulbs hanging from the ceiling over a table in a kitchen. While the images b) to e) might still have some visual similarity with the light bulb shown in image a), at least image f) showing two lamps in a kitchen is clearly not having a very high similarity with image a). The light bulb itself represents only a very small fraction of the total image in image f). Thus, without any image ranking, a customer performing a visual search in a data base comprising this product data set 100 of the light bulb might get as a top search result one of these images a) to f) showing the light bulb, also when searching for a product different from a light bulb, like, for example, a kitchen, a table, a picture frame, a socket, or a bed. Thus, the customer would be wondering why a lightbulb is returned as search result when searching for a completely different product, like, for example, the kitchen. Thus, in this example, matching the kitchen image as part of the product data set 100 related to the light bulb as product 110 should be prevented when searching for a kitchen, what is achieved by ranking the data base with the method according to the invention.

Therefore, the data base is ranked by assigning an image rank to each of the images 120 a) to f) of the product data set 100. A reference image 130 needs to be determined for each product data set 100, which is representative of the respective product 110 linked to the product data set 100. In this example, a good selection of the reference image 130 would be the first image 120 of the product data set 100, i.e. image a). When comparing each of the images 120 a) to f) of the product data set 100 with the reference image 130, i.e. image a), a respective measure of similarity is determined. This can be preferably done by creating a vector representation of each of the images a) to f) and a vector representation of the reference image a), and calculating a distance of the respective vector representation of the images a) to f) from the vector representation of the reference image a). Calculating the distance of the vector representations of the respective images is preferably performed by applying the mathematical operation referred to as the dot product cosine similarity. The vector representation of the images can advantageously be generated with a machine learning algorithm. Having determined the measure of similarity for each of the images, an image rank is assigned to each of the images a) to f). The image rank is based on the determined measure of similarity, and can be also identically to the measure of similarity. For example, the image rank can be selected on a scale from 0 to 1, with an image rank of 1 being the highest similarity, i.e. identity of the images, and an image rank of 0 being completely different.

In this example shown in Fig. 3, image a) would have an image rank of 1, whereas image ranks of 0.4 and 0.23 are assigned to images b) and c), respectively. Images d) and e) would be provided with an image rank of 0.33 and 0.27, respectively. While these images a) to e) still have some visual similarity to the main image a), image f), which is nearly completely different to the main image a), is provided with an image rank of only 0.02. Thus, having saved the product data set 100 with ranked images in a data base, a visual search can be performed advantageously in this data base. Thus, when performing the visual search, a threshold is set, such that each search result having an image rank equal to or lower than the threshold can be discarded or ignored during search or when providing the search results.

Thus, according to the present invention, the relevance of the search results for a customer can be increased by avoiding false positive search results with the ranked data base.

Another example of images of a product data set that may be regarded as being not suitable and therefore not relevant for visual search are images created by a synthetic data process, where product images are rendered automatically from different angles. In this case, a flat projection of a product from a specific viewing direction along one of the axes may result in a very unspecific shape of the product. Thus, using such an image for visual search will result most probably only in false positive results, thus reducing the relevance of the search results. Therefore, by assigning al low image rank to these images that do not add value to visual search using the method according to the present invention, the accuracy and relevance of visual search results can be improved.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. The mere fact that certain measures are re-cited in mutually different dependent claims does not indicate that a combination of these measures cannot be used to advantage. Any reference signs in the claims should not be construed as limiting the scope.

### LIST OF REFERENCE SIGNS:

- 100: product data set
- 100: product
- 110: image
- 120: reference image

## Claims

1. A method of generating a ranked database, the method comprising the steps of
receiving (S 110) a plurality of product data sets (100), each product data set being linked to a respective product (110) and comprising at least one image (120) correlated to the product (110);
determining (S120), for each product data set (100), a reference image (130), the reference image (130) being representative of the respective product (110) linked to the product data set (100);
assigning (S130), to each image (120) of each product data set (100), an image rank based on a measure of similarity of the image (120) with respect to the respective reference image (130) of the product data set (100); and
saving (S140) the plurality of product data sets (100) comprising the image ranks to a database.

2. The method according to claim 1, wherein the image rank is indicative of a relevance of the image (120) with respect to the product (110).

3. The method according to any of claims 1 or 2, wherein the measure of similarity is determined by creating a vector representation of the image (120) and a vector representation of the reference image (130), and calculating a distance of the vector representation of the image (120) from the vector representation of the reference image (130).

4. The method according to claim 3, wherein calculating the distance of the vector representation of the image (120) from the vector representation of the reference image (130) comprises applying a mathematical operation referred to as the dot product cosine similarity.

5. The method according to any of the preceding claims, wherein the step of assigning an image rank to each image (120) of each product data set (100) comprises taking into account an image quality, a clarity, a visual complexity, an object to total image size coverage, and/or a relevancy to product attributes of the image.

6. The method according to any of the preceding claims, wherein a main image of the product data set (100) is used as reference image (130).

7. The method according to claim 6, wherein the main image is a first image of the product data set (100).

8. The method according to any of claims 1 to 5, wherein the step of determining a reference image (130) comprises obtaining an average image by averaging over a vector representation of each of the images (120) of the product data set (100) and using the average image as reference image (130).

9. The method according to any of claims 1 to 5, wherein a product category of the product data set (100) is used to determine the reference image (130).

10. A method of visually searching for a product (110) in a ranked database, the method comprising the steps of:
providing (S210) a ranked database, the database comprising a plurality of product data sets (100), each product data set (100) being linked to a respective product (110) and comprising at least one image (120) correlated to the product (110), wherein each image (120) correlated to the product (110) comprises an image rank indicating a relevance of the image (120) with respect to the product (110);
receiving (S220) a search image of a product (110) to be searched in the ranked database;
performing (S230) a visual search in the database using the search image as input image, the visual search providing a plurality of search results, each of the search results corresponding to an image (120) of a product data set (100) of the database having a similarity to the search image, the image (120) being correlated to a product (110) linked to the product data set (100);
performing (S240) a threshold operation on each of the plurality of search results, the threshold operation maintaining a search result if the image rank of the corresponding image (120) is larger than a predefined threshold, and the threshold operation discarding a search result if the image rank of the corresponding image (120) is smaller than the predefined threshold; and
providing (S250) the search results as an output of the method.

11. The method according to claim 10, wherein during step S210 a ranked database generated with the method according to any of claims 1 to 9 is provided.

12. The method according to any of claims 10 to 11, wherein the threshold is predefined either as a default value or is selected when receiving the search image.

13. A data processing apparatus comprising means for carrying out the steps of the method according to any of claims 1 to 9 or of the method according to any of claims 10 to 12.

14. A computer program comprising instructions which, when the program is executed by a computer, cause the computer to carry out the steps of the method according to any of claims 1 to 9 or of the method according to any of claims 10 to 12.

15. A computer-readable storage medium comprising instructions which, when executed by a computer, cause the computer to carry out the steps of the method according to any of claims 1 to 9 or of the method according to any of claims 10 to 12.
